# EUROPÄISCHE PATENTSCHRIFT

(11) **EP 1 844 212 B1**
(45) Veröffentlichungstag und Bekanntmachung des Hinweises auf die Patenterteilung: **30.07.2008**
(21) Anmeldenummer: 06707799.0
(22) Anmeldetag: 23.01.2006
(51) Int. Cl.: E21B 43/22

(54) **VERWENDUNG VON WÄSSRIGEN DISPERSIONEN ZUR TERTIÄREN ERDÖLFÖRDERUNG**
USE OF AQUEOUS DISPERSIONS FOR TERTIARY PETROLEUM PRODUCTION
UTILISATION DE DISPERSIONS AQUEUSES POUR LA RECUPERATION TERTIAIRE DU PETROLE

(30) Priorität: 25.01.2005 DE 102005003569
(43) Veröffentlichungstag der Anmeldung: 17.10.2007
(73) Patentinhaber: BASF SE, 67056 Ludwigshafen (DE)
(72) Erfinder: HUFF, Jürgen, 67063 Ludwigshafen (DE); GUZMANN, Marcus, 69242 Mühlhausen (DE); BRODT, Gregor, 64646 Heppenheim (DE); MUKHERJEE, Pulakesh, 68309 Mannheim (DE); POGANIUCH, Peter, 67434 Neustadt (DE)
(86) Internationale Anmeldenummer: PCT/EP2006/050376
(87) Internationale Veröffentlichungsnummer: WO 2006/079615

(56) Entgegenhaltungen:
- EP-A- 0 452 758
- US-A- 4 970 251

## Beschreibung

Die Erfindung betrifft die Verwendung von wasserlöslichen Polymeren zur tertiären Erdölförderung durch Einbringen des Polymers in eine Erdöllagerstätte, bei dem die wasserlöslichen Polymere in Form einer Dispersion aus dem wasserlöslichen Polymer sowie mindestens eines wasserlöslichen, polymeren Stabilisators eingesetzt werden.

Bei den bekannten Techniken zur Erdölförderung lässt sich üblicherweise nur ein Teil des in der Lagerstätte vorhandenen Erdöls fördern. Nach dem Anbohren einer neuen Lagerstätte wird das Erdöl in aller Regel durch den Eigendruck in der Lagerstätte gefördert. Dies ist die sogenannte Primärförderung. Lässt der Lagerstättendruck nach, dann kann der Lagerstättendruck durch Einpressen von Wasser wieder erhöht oder aufrecht erhalten werden. Dies ist die sogenannte sekundäre Erdölförderung.
Aber auch mittels sekundärer Förderung lässt sich ein erheblicher Teil des Erdöls nicht aus dem Speichergestein herauslösen. Oft verbleiben nach primärer und sekundärer Förderung noch 65 % und mehr des Öls in der Lagerstätte.

Es ist bekannt, die Ausbeute durch tertiäre Ölfördermaßnahmen weiter zu steigern. Eine Übersicht zur tertiären Ölförderung findet sich beispielsweise im Journal of Petroleum Science and Engineering 19 (1998) 265-280*.* Zur tertiären Ölförderung gehören beispielsweise Wärmeverfahren, bei denen Heißwasser oder Heißdampf (das so genannte "Dampffluten") in die Lagerstätte eingepresst wird. Hierdurch wird die Viskosität des Öls herabgesetzt. Als Flutmedium können auch Gase wie CO₂ oder Stickstoff Einsatz finden. Weiterhin bekannt sind Verfahren, bei denen man geeignete Chemikalien als Hilfsmittel einsetzt. Beispielsweise können geeignete Tenside zur besseren Ablösung des Erdöls vom Gestein eingesetzt werden ("Tensidftuten"). Es ist weiterhin bekannt, der wässrigen Phase viskositätserhöhende Polymere zuzusetzen. Hierdurch wird die Viskosität der Wasserphase der der Ölphase angeglichen und das Öl leichter durch die wässrige Phase aus der porösen Formation verdrängbar. Diese Technik ist als sogenanntes "Polymerfluten" bekannt. Einzelheiten zu der Technik sind beispielsweise der Monographie von W. Littmann, "Polymer Flooding", Elsevier Amsterdam, New York 1988 zu entnehmen. Es sind auch Kombinationen der beschriebenen Techniken möglich, beispielsweise die WAG-Technik (*water alternated with gas)* bei der man kombiniert mit Wasser sowie einem Gas wie beispielsweise CO₂ flutet.

Zum Polymerfluten werden vor allem hochmolekulare Polyacrylamid-Derivate, z.B. teilhydrolysierte Polyacrylamide oder Xanthane eingesetzt. Typische Molekulargewichte M_{w} liegen in der Größenordnung von 1 000 000 bis 20 000 000 g/mol. US 4,702,319 offenbart ein Copolymer aus Acrylamid, modifiziertem Acrylamid und Sulfonsäuregruppenhaltigen Monomeren, US 6,020,289 ein Copolymer mit Acrylamid-Derivaten zum Polymerfluten. Die Erhöhung der Viskosität der Wasserphase durch die Polymere bewirkt einen verbesserten Flutwirkungsgrad.

WO 97/42397 offenbart eine Zusammensetzung zum Polymerfluten aus einem wasserlöslichen Polymer, beispielsweise Polyacrylamid oder Polyacrylsäure und einer Verbindung mit einem Harnstoff, Melamin, Benzoguanamin oder Glykoluril-Gerüst, wobei das Gerüst mit Hydroxymethyl- oder Alkoxymethylgruppen modifiziert ist.

In manchen Anwendungsformen werden die Polymere zur Erzeugung von Gelen verwendet, die über eine reine Verdickungswirkung hinaus hochpermeable Regionen der Formation blockieren, beispielsweise durch Vernetzung von hochmolekularen Polymeren mit geeigneten mehrwertigen Kationen wie in der US 5,244,936 beschrieben. Das Blockieren der hochpermeablen Regionen der Lagerstätte kann dazu dienen, weniger permeable, aber ölreiche Abschnitte besser zu erreichen und damit den Flutwirkungsgrad zu erhöhen.

Bei der tertiären Erölförderung sind besondere Anwendungsbedingungen zu beachten. Nicht alle als Verdickungsmittel bekannten Polymere eignen sich daher zum Einsatz bei der tertiären Ölförderung.

In Erdöllagerstätten herrschen üblicherweise Temperaturen von bis zu 300°C. Die zum Polymerfluten eingesetzten Polymere sollten daher auch bei längerer Einwirkung höherer Temperaturen, beispielsweise einer Einwirkung von bis zu 3 Jahren, keinen wesentlichen Abbau aufweisen, der zu einer unerwünschten Verringerung der Viskosität führen könnte. Weiterhin ist in Erdöllagerstätten u.U. mit hohen Salzfrachten (beispielsweise Chloride, Sulfate oder Hydrogencarbonate von Na, Ca, Mg oder Sr-lonen) zu rechnen, d.h. eingesetzte Polymere müssen auch noch bei höheren Konzentrationen von Salz die gewünschte Wirkung aufweisen. Schließlich variiert die Viskosität des Erdöls je nach Lagerstättenbedingungen sehr stark. Typische Viskositäten dünnflüssiger Erdöle betragen ca. 4 mPa • s, während zähflüssige Öle auch 200 mPa • s und mehr erreichen können. Die Viskosität eingesetzter Lösungen zum Polymerfluten sollte daher möglichst leicht veränderbar sein, um eine optimale Anpassung an die Viskosität des Erdöls zu erreichen.

Zum Polymerfluten werden üblicherweise stark verdünnte Lösungen von Polymeren eingesetzt. Das Lösen von hochmolekularen Polymeren in Wasser bereitet besondere Probleme. Besonders zu Beginn des Lösevorgangs treten sehr hochviskose Phasen auf, die eine Verarbeitung, insbesondere die Injizierbarkeit in die Formation, erschweren können. Eine hohe Viskosität bedingt u. a. hohe Druckverluste beim Einpressen in die Formation. Es ist daher in der Regel nötig, vor Ort geeignete Lösestationen mit Mischern, Dispergieraggregaten o.ä. einzusetzen. Hierzu ist von US 5,139,087 beispielsweise vorgeschlagen worden, den Lösevorgang durch intensives Scheren oder durch die Einwirkung von Ultraschall zu unterstützen. Abgesehen vom apparativen Aufwand können das Scheren der Polymerlösungen, oder die Einwirkung von Ultraschall zum unerwünschten Abbau der Polymere führen.

US 4,380,600 offenbart wässrige Dispersionen von wasserlöslichen Polymeren aus, bei dem die Polymerisation wasserlöslicher Monomere in Gegenwart eine wasserlöslichen Polymers im Gewichtsverhältnis 1:5 bis 5:1 vorgenommen wird. Die Verwendung zur tertiären Erölförderung ist nicht offenbart.

Unsere noch unveröffentlichte Anmeldung mit dem Aktenzeichen PCT/EP/04/08011 offenbart wässrige Dispersionen von wasserlöslichen Polymerisaten von ethylenisch ungesättigten anionischer Monomerer durch radikalische Polymerisation im wässrigen Medium in Gegenwart mindestens eines Stabilisators sowie deren Verwendung als Verdickungsmittel für wässrige Systeme. Die Verwendung zur tertiären Erölförderung ist nicht offenbart.

Aufgabe der Erfindung war es ein verbessertes Verfahren zur tertiären Erdölförderung bereitzustellen, mit welchem ein wasserlösliches Polymer zum Polymerfluten auf einfache Art und Weise, ohne die Verwendung aufwändiger Lösestationen in die Formation eingebracht werden kann.

Dementsprechend wurde die Verwendung von wasserlöslichen Polymeren zur tertiären Erdölförderung durch Einbringen des Polymers in eine Erdöllagerstätte gefunden, wobei das wasserlösliche Polymer in Form einer Dispersion aus dem wasserlöslichen Polymer sowie mindestens eines wasserlöslichen, polymeren Stabilisators eingesetzt wird.

Zu der Erfindung ist im Einzelnen das Folgende auszuführen:

Erfindungsgemäß werden zur tertiären Ölförderung wässrige Dispersionen von wasserlöslichen Polymeren verwendet. Die Dispersionen umfassen ein wasserlösliches Polymer, welches unter Verwendung von polymeren, wasserlöslichen Stabilisatoren als Dispersion stabilisiert wird. Aufgrund des Stabilisators sind die Dispersionen auch bei höheren Konzentrationen von Polymeren im Vergleich zu Polymerlösungen ohne Stabilisator noch relativ dünnflüssig und gut handhabbar.

Bevorzugt werden solche Dispersionen verwendet, deren Viskosität bei einer pH-Wert-Änderung und/oder Verdünnung ansteigt.

Es kann sich hierbei um Dispersionen handeln, deren Viskosität bei einer pH-Wert-Zunahme und/oder Verdünnung ansteigt, insbesondere solche Dispersionen, bei denen die Viskosität im neutralen und alkalischen Bereich höher ist als im sauren Bereich. Es kann sich umgekehrt um Dispersionen handeln, deren Viskosität bei einer pH-Wert-Abnahme und/oder Verdünnung ansteigt, insbesondere solche Dispersionen, bei denen die Viskosität im neutralen und sauren Bereich höher ist als im alkalischen Bereich.

In einer bevorzugten Ausführungsform der Erfindung handelt es sich bei den wasserlöslichen Polymeren um solche, welche saure Gruppen aufweisende, monoethylenisch ungesättigte Monomere (A) sowie optional davon verschiedene monoethylenisch ungesättigte Monomere (B) und/oder optional Vernetzer (C) als monomere Bausteine umfassen.

Die Herstellung der Dispersion erfolgt in der bevorzugten Ausführungsform durch radikalische Polymerisation der Monomeren (A) sowie optional (B) und/oder (C) in wässrigem Medium in Gegenwart mindestens eines polymeren, wasserlöslichen Stabilisators. Die Menge der Stabilisatoren beträgt im Regelfalle 5 bis 250 Gew.-%, bezogen auf die Summe aller eingesetzten Monomere.

Bei den sauren Monomeren (A) handelt es sich um monoethylenisch ungesättigte Monomere, welche mindestens eine saure Gruppe umfassen. Bei den sauren Gruppen kann es sich beispielsweise um Carboxylgruppen, Sulfonsäuregruppen oder Phosphonsäuregruppen handeln. Die Gruppen können aber auch ganz oder teilweise neutralisiert sein und beispielsweise als Alkalimetall- oder Ammoniumsalze eingesetzt werden.

Beispiele von Monomeren (A) umfassen monoethylenisch ungesättigte C₃- bis C₅-Carbonsäuren wie Acrylsäure, Methacrylsäure, Ethacrylsäure, Crotonsäure, Maleinsäure oder Fumarsäure, Vinylsulfonsäure, Styrolsulfonsäure, Acrylamidomethylpropansulfonsäure, Vinylphosphonsäure. Zu den bevorzugt eingesetzten Monomeren (A) gehören Acrylsäure, Methacrylsäure, Maleinsäure und Acrylamidomethylpropansulfonsäure. Besonders bevorzugt sind wässrige Dispersionen von Polymerisaten auf Basis von Acrylsäure. Die Monomeren (A) können entweder allein zu Homopolymerisaten oder auch in Mischung untereinander zu Copolymerisaten polymerisiert werden. Beispiele hierfür sind die Homopolymerisate der Acrylsäure oder Copolymerisate der Acrylsäure mit Methacrylsäure und/oder Maleinsäure.

Im Regelfalle beträgt die Menge an Monomeren (A) mindestens 25 Gew.-% bezüglich der Gesamtmenge aller eingesetzten Monomeren. Bevorzugt beträgt die Menge mindestens 50 Gew.-%, besonders bevorzugt mindestens 75 Gew.-% und ganz besonders bevorzugt mindestens 90 Gew.-%.

Optional können auch noch weitere, von den Monomeren (A) verschiedene monoethylenisch ungesättigte Monomere (B) eingesetzt werden. Es kann sich hierbei um neutrale oder basische Monomere handeln. Die Monomere können funktionelle Gruppen aufweisen, die dem eine gute Wasserlöslichkeit vermittelt. Es kann sich aber auch um weniger gut wasserlösliche Gruppen oder sogar hydrophobe Gruppen handeln, vorausgesetzt, die Wasserlöslichkeit des Polymeren als Ganzes wird hiervon nicht in unerwünschtem Maße beeinträchtigt.

Beispiele geeigneter Comonomere (B) umfassen Acrylamid, Methacrylamid, Allylalkohol, Allyletherethoxylate, Vinylacetat, Vinylpropionat, Dialkylaminoethyl(meth)acrylate, Dialkylaminopropyl(meth)acrylate, Diallyldimethylammoniumchlorid, Vinylimidazol und quaterniertes Vinylimidazol. Weitere Beispiele umfassen Acrylsäureester von einwertigen Alkoholen mit 1 bis 4 C-Atomen, Methacrylsäureester von einwertigen Alkoholen mit 1 bis 2 C-Atomen sowie (Meth)acrylsäureester, bei denen die Estergruppen zusätzliche O-Atome aufweisen wie beispielsweise (Meth)acrylsäureester von Polyalkylenglykolen und/oder Alkylpolyalkylenglykolen. Basische Monomere wie Dimethylaminoethylacrylat oder Dimethylaminoethylmethacrylat können sowohl in Form der freien Basen als auch in teilweise oder in vollständig neutralisierter Form bei der Polymerisation eingesetzt werden. Selbstverständlich können auch Gemische mehrerer verschiedener Monomere (B) eingesetzt werden.

Der Fachmann trifft unter den zusätzlichen Monomeren (B) je nach den gewünschten Eigenschaften der Dispersionen eine geeignete Auswahl. Die Comonomere werden bei der Herstellung der Polymere in solchen Mengen eingesetzt, dass die entstehenden Polymere wasserlöslich sind. Bezogen auf die bei der Polymerisation insgesamt eingesetzten Monomeren beträgt die Menge an Comonomeren (B) üblicherweise 0 bis 75 Gew.-%, bevorzugt 1 bis 50 Gew.-% und besonders bevorzugt 5 bis 25 Gew.-%.

Bevorzugte Copolymere sind beispielsweise Copolymere aus 25 bis 90 Gew.-% Acrylsäure und 75 bis 10 Gew.-% Acrylamid, Allyletherethoxylaten, (Meth)acrylsäureestern von Polyalkylenglykolen und/oder Alkylpolyalkylenglykolen als Comonomeren.

In einer bevorzugten Ausführungsform der Erfindung kann die Polymerisation zusätzlich in Gegenwart mindestens eines Vernetzers (C) durchgeführt werden. Man erhält dann Copolymere mit einer höheren Molmasse als beim Polymerisieren der Monomere (A) sowie optional (B) in Abwesenheit eines Vernetzers.

Als Vernetzer (C) können in prinzipiell bekannter Art und Weise Verbindungen verwendet werden, die über mindestens zwei ethylenisch ungesättigte Doppelbindungen im Molekül verfügen. Beispiele geeigneter Vernetzer umfassen Triallylamin, Pentaerythrittriallether, Methylenbisacrylamid, N,N'-Divinylethylenharnstoff, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat oder Triallylmethylammoniumchlorid.

Die Vernetzung sollte für die erfindungsgemäße Anwendung aber keinesfalls zu hoch sein, so dass die Wasserlöslichkeit der Polymere nicht beeinträchtigt wird. Falls bei der Herstellung der anionischen Dispersionen Vernetzer eingesetzt werden, so betragen die jeweils verwendeten Mengen an Vernetzer im Regelfalle 0,0005 bis 5,0 Gew.-%, bevorzugt 0,001 bis 2,0 Gew.-%, besonders bevorzugt 0,01 bis 1,5 Gew.-% und ganz besonders bevorzugt 0,1 bis 1 Gew.-%, jeweils bezogen auf die Gesamtmenge aller bei der Polymerisation eingesetzten Monomeren.

Die sauren Monomere (A) sowie optional weiteren Monomere (B) bzw. (C) werden durch radikalische Polymerisation polymerisiert. Hierzu können übliche Initiatoren verwendet werden, die unter den Reaktionsbedingungen Radikale bilden. Geeignete Polymerisationsinitiatoren sind beispielsweise Peroxide, Hydroperoxide, Wasserstoffperoxid, Redoxkatalysatoren und Azoverbindungen wie 2,2-Azobis(N,N- dimethylenisobutyramidine)dihydrochlorid, 2,2-Azobis(4-methoxy-2,4-dimethylvaleronitril), 2,2-Azobis(2,4-dimethylvaleronitril) und 2,2-Azobis(2-amidinopropan)dihydrochlorid). Die Initiatoren werden in den bei der Polymerisation üblichen Mengen eingesetzt. Bevorzugt werden Azostarter als Polymerisationsinitiatoren verwendet. Man kann die Polymerisation jedoch auch mit Hilfe ernergiereicher Strahlen wie Elektronenstrahlen oder durch Bestrahlen mit UV-Licht initiieren.

Die Polymerisation der Monomere zur Herstellung der erfindungsgemäß verwendeten Polymerdispersionen wird in Gegenwart von mindestens einem wasserlöslichen polymeren Stabilisator vorgenommen, ausgewählt aus der Gruppe (a), Gruppe (b) und/oder Gruppe (c). Selbstverständlich können auch Gemische verschiedener Stabilisatoren (a) und/oder (b) und/oder (c) eingesetzt werden.

Als Stabilisator der Gruppe (a) kommen bevorzugt wasserlösliche Pfropfpolymerisate von Vinylacetat auf Polyethylenglykolen, ein- oder beidseitig mit Alkyl-, Carboxyl- oder Aminogruppen endgruppenverschlossene Polyethylenglykole und/oder Copolymerisate aus Alkylpolyalkylenglykolmethacrylaten und Methacrylsäure in Betracht. Polyalkylenglykole werden beispielsweise in der WO-A-03/046024, Seite 4, Zeile 37 bis Seite 8, Zeile 9, beschrieben. Auf 100 Gewichtsteile der Pfropfgrundlage pfropft man beispielsweise 10 bis 1000, vorzugsweise 30 bis 300 Gewichtsteile Vinylacetat. Bevorzugt setzt man als Pfopfgrundlage Polyethylenglykol mit einem Molekulargewicht Mₙ von 1000 bis 100 000 g/mol ein.

Bevorzugt in Betracht kommende Stabilisatoren der Gruppe (a) sind außerdem Copolymerisate aus Alkylpolyalkylenglykolacrylaten oder AlkylpolyalkylenglykolmethAcrylaten und Acrylsäure und/oder Methacrylsäure. Solche Verbindungen sind beispielsweise als Dispergiermittel für Zement bekannt. Sie werden hergestellt, indem man zunächst Additionsprodukte von Ethylenoxid und/oder Propylenoxid an beispielsweise C₁- bis C₁₈-Alkohole mit Acrylsäure und/oder Methacrylsäure verestert und diese Ester dann mit Acrylsäure und/oder Methacrylsäure copolymerisiert. Die üblicherweise eingesetzten Copolymerisate enthalten beispielsweise 5 bis 60, vorzugsweise 10 bis 35 Gew.-% einpolymerisierte Einheiten von Alkylpolyalkylenglykol(meth)acrylaten und 95 bis 40, vorzugsweise 90 bis 65 Gew.-% einpolymerisierte Einheiten an (Meth)-Acrylsäure. Sie weisen bevorzugt Molmassen M_{w} von 2000 bis 50 000, vorzugsweise 5000 bis 20 000 auf. Diese Copolymerisate können in Form der freien Säuregruppen oder auch in vollständig oder teilweise neutralisierter Form bei der Herstellung der erfindungsgemäßen Dispersionen eingesetzt werden. Die Carboxylgruppen der Copolymerisate werden vorzugsweise mit Natronlauge oder Ammoniak neutralisiert.

Weitere geeignete wasserlösliche Polymere (a) sind Polyalkylenglykole mit Molmassen Mₙ von 100 bis 100 000 g/mol, bevorzugt von 300 bis 80 000 g/mol, besonders bevorzugt von 600 bis 50 000 g/mol und insbesondere von 1 000 bis 50 000 g/mol, ein- oder beidseitig mit Alkyl-, Carboxyl- oder Aminogruppen endgruppenverschlossene Polyalkylenglykole mit Molmassen Mₙ von 100 bis 100 000 g/mol, bevorzugt von 300 bis 80 000 g/mol, besonders bevorzugt von 600 bis 50 000 g/mol und insbesondere von 1 000 bis 50 000 g/mol. Wasserlösliche Polymere werden beispielsweise in der oben zitierten WO-A-03/046024, Seite 4, Zeile 37 bis Seite 8, Zeile 9, beschrieben. Bevorzugte Polyalkylenglykole sind Polyethylenglykol, Polypropylenglykol sowie Blockcopolymere aus Ethylenoxid und Propylenoxid. Die Blockcopolymeren können Ethylenoxid und Propylenoxid in beliebigen Mengen und in beliebiger Reihenfolge einpolymerisiert enthalten. Die OH-Endgruppen der Polyalkylenglykole können gegebenenfalls mit einer Methylgruppe verschlossen sein.

Als wasserlösliche polymere Stabilisatoren der Gruppe (b) verwendet man vorzugsweise hydrolysierte Copolymerisate aus Vinylalkylethern und Maleinsäureanhydrid in Form der freien Carboxylgruppen und in Form der zumindest partiell mit Alkalimetallhydroxiden oder Ammoniumbasen neutralisierten Salze. Die Alkylgruppe der Vinylalkylether kann beispielsweise 1 bis 4 Kohlenstoffatome aufweisen. Die Copolymerisate sind erhältlich durch Copolymerisieren von Vinylalkylethern mit Maleinsäureanhydrid und anschließende Hydrolyse der Anhydridgruppen zu Carboxylgruppen und gegebenenfalls partielle oder vollständige Neutralisation der Carboxylgruppen. Besonders bevorzugte wasserlösliche Polymere der Gruppe (b) sind hydrolysierte Copolymerisate aus Vinylmethylether und Maleinsäureanhydrid in Form der freien Carboxylgruppen und in Form der zumindest partiell mit Natronlauge, Kalilauge oder Ammoniak neutralisierten Salze.

Weitere geeignete wasserlösliche polymere Stabilisatoren der Gruppe (b) sind wasserlösliche Stärken aus der Gruppe kationisch modifizierter Kartoffelstärke, anionisch modifizierter Kartoffelstärke abgebauter Kartoffelstärke und Maltodextrin. Anionisch modifizierte Katoffelstärken sind beispielweise durch Carboxylierung erhältlich. Der Abbau von Kartoffelstärken kann beispielsweise enzymatisch oder hydrolytisch erfolgen. Von den genannten Stärken wird vorzugsweise Maltodextrin eingesetzt.

Bei wasserlöslichen Stabilisatoren der Gruppe (c) handelt es sich um wasserlösliche Copolymere aus
(c1) wasserlöslichen, nichtionischen, monoethylenisch ungesättigten Monomeren,
(c2) wasserlöslichen, kationischen, monoethylenisch ungesättigten Monomeren und optional
(c3) wasserlöslichen, anionischen, monoethylenisch ungesättigten Monomeren,
wobei der Anteil der einpolymerisierten kationischen Monomere größer ist als der der anionischen Monomeren.

Beispiele für wasserlösliche, nichtionische Monomere (c1) sind Acrylamid, Methacrylamid, N-Vinylformamid, N-Vinylpyrrolidon und N-Vinylcaprolactam. Prinzipiell eignen sich als Monomere der Gruppe (c1) alle nichtionischen, monoethylenisch ungesättigten Monomere, die eine Wasserlöslichkeit von mindestens 100 g/I bei einer Temperatur von 20°C haben. Besonders bevorzugt sind Monomere (c1), die in jedem Verhältnis mit Wasser mischbar sind und klare wässrige Lösungen bilden wie Acrylamid oder N-Vinylformamid.

Wasserlösliche, kationische, monoethylenisch ungesättigte Monomere (c2) sind beispielsweise Dialkylaminoalkyl(meth)acrlylate wie Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dialkyldiallyammoniunhalogenide wie Dimethyldiallylammoniumchlorid und Diethyldiallylammoniumchlorid, N-Vinylimidazol und quaterniertes N-Vinylimidazol. Basische Monomere wie Dimethylaminoethylacrylat oder Dimethylaminoethylmethacrylat, können sowohl in Form der freien Basen als auch in teilweise oder vollständig mit Säuren wie Salzsäure, Schwefelsäure, Ameisensäure und p-Toluol-sulfonsäure neutralisierter Form eingesetzt werden. Die basischen Monomeren können außerdem teilweise oder vollständig mit C₁- bis C₁₈-Alkylhalogeniden und/oder C₁- bis C₁₈-Alkyl C₁- bis C₁₈-Alkylarylhalogeniden quaterniert sein und in dieser Form bei der Polymerisation eingesetzt werden. Beispiele hierfür sind die vollständig mit Methylchlorid quaternierten Dimethylaminoethyl(meth)acrylate wie Dimethylaminoethylacrylat-methochlorid oder Dimethylaminoethylmethacrylat-methochlorid. Die Polymeren der Gruppe (c) können als kationische Gruppe auch Vinylamineinheiten enthalten. Solche Polymeren sind z.B. dadurch erhältlich, dass man N-Vinylformamid gegebenenfalls zusammen mit mindestens einem anionischen wasserlöslichen Monomer polymerisiert und die Polymeren anschließend unter teilweiser Abspaltung von Formylgruppen zu Vinylamineinheiten enthaltenden Polymeren hydrolysiert.

Die polymeren Stabilisatoren der Gruppe (c) können optional noch mindestens ein anionisches monoethylenisch ungesättigtes Monomer (c3) einpolymerisiert enthalten. Beispiele für solche Monomere sind die obengenannten anionischen Monomeren, die wasserlösliche Polymere bilden wie Acrylsäure, Methacrylsäure, Vinylsulfonsäure, Vinylphosphonsäure, Maleinsäure, Fumarsäure, Crotonsäure, Itakonsäure sowie die Alkalimetall- und Ammoniumsalze dieser Säuren.

Beispiele für bevorzugte Stabilisatoren der Gruppe (c) sind wasserlösliche Copolymerisate aus
(c1) Acrylamid, Methacrylamid, N-Vinylformamid, N-Vinylpyrrolidon und/oder N-Vinylcaprolactam,
(c2) Dialkylaminoalkylacrylat, Dialkylaminoalkylmethacrylat, partiell oder vollständig neutralisierte Dialkylaminoalkyl(meth)acrylate, quaternierte Dialkylaminoalkyl-(meth)acrylate, Dialkyldiallylammoniunhalogenide, N-Vinylimidazol und quaterniertem N-Vinylimidazol und gegebenenfalls
(c3) Acrylsäure, Methacrylsäure, Vinylsulfonsäure, Vinylphosphonsäure, Maleinsäure, Fumarsäure, Crotonsäure, Itakonsäure sowie die Alkalimetall- und Ammoniumsalze dieser Säuren.

Die wasserlöslichen polymeren Stabilisatoren (c) enthalten beispielsweise
(c1) 2 bis 90, vorzugsweise 20 bis 80 und besonders bevorzugt 35 bis 70 mol % mindestens eines nichtionischen Monomers
(c2) 2 bis 90, vorzugsweise 20 bis 80 und besonders bevorzugt 35 bis 70 mol % mindestens eines kationischen Monomers und
(c3) 0 bis 48,9 mol-%, vorzugsweise 0 bis 30 und besonders bevorzugt 0 bis 10 mol-% mindestens eines anionischen Monomers in einpolymerisierter Form, wobei der Anteil der kationischen Monomereinheiten größer ist als der der anionischen Monomereinheiten.

Einzelne Beispiele für polymere Stabilisatoren (c) sind Copolymerisate aus Acrylamid und Dimethylaminoethylacrylatmethochlorid, Copolymerisate aus Acrylamid und Dimethylaminoethylmethacrylatmethochlorid, Copolymerisate aus Acrylamid und Dimethylaminopropylacrylatmethochlorid, Copolymerisate aus Methacrylamid und Dimethylaminoethylmethacrylmethochlorid, Copolymerisate aus Acrylamid, Dimethylaminoethylacrylatmethochlorid und Acrylsäure, Copolymerisate aus Acrylamid, Dimethylaminoethylmethacrylatmethochlorid und Methacrylsäure und Copolymerisate aus Acrylamid, Dimethylaminoethylacrylatmethochlorid und Acrylsäure.

Die Stabilisatoren (c) haben beispielsweise einen K-Wert von 15 bis 200 , vorzugsweise 30 bis 150 und besonders bevorzugt 45 bis 110 (bestimmt nach H. Fikentscher, Cellulose-Chemie, Band 13, 58 - 64 und 71 - 74 (1932) in 3 gew.-%iger wässriger Kochsalzlösung bei 25°C, einer Polymerkonzentration von 0,1 Gew.-% und einem pH-Wert von 7).

In einer bevorzugten Ausführungsform der Erfindung handelt es sich bei den Stabilisatoren um mindestens zwei verschiedenen wasserlöslichen Stabilisatoren. Hierbei handelt es sich um mindestens einen wasserlöslichen polymeren Stabilisator, ausgewählt aus der Gruppe von (a), sowie um mindestens einen wasserlöslichen polymeren Stabilisator, ausgewählt aus der Gruppe von (b) und/oder (c).

Die Gesamtmenge aller eingesetzten Stabilisatoren zusammen beträgt üblicherweise 5 bis 250 Gew.-% bezogen auf die Menge des wasserlöslichen Polymers. Bevorzugt beträgt die Menge 25 bis 200 Gew.-%, besonders bevorzugt 50 bis175 Gew.-% und ganz besonders bevorzugt 75 bis 150 Gew.-%.

Falls eine Kombination aus (a) und (b) und/oder (c) eingesetzt wird, beträgt das Gewichtsverhältnis der wasserlöslichen polymeren Stabilisatoren der Gruppe (a) zu den wasserlöslichen polymeren Stabilisatoren der Gruppe (b) und/oder (c) in den erfindungsgemäß verwendeten Dispersionen üblicherweise 1 : 5 bis 5 : 1 und liegt vorzugsweise in dem Bereich von 1 : 2 bis 2 : 1, besonders bevorzugt 1 : 1,5 bis 1,5 : 1.

Im Folgenden sind besonders bevorzugte Kombinationen von Stabilisatoren zur Ausführung der Erfindung genannt.

### Kombination 1:

(a) Mindestens ein Pfropfpolymerisat von Vinylacetat auf Polyethylenglykolen eines Molekulargewichts Mₙ von 1000 bis 100 000 g/mol und
(b) mindestens ein hydrolysiertes Copolymerisat aus Vinylmethylether und Maleinsäureanhydrid in Form der freien Carboxylgruppen oder in Form der zumindest partiell mit Natronlauge, Kalilauge oder Ammoniak neutralisierten Salze.

### Kombination 2:

(a) Copolymerisate aus Alkylpolyalkylenglykolacrylaten oder Alkylpolyalkylenglykolmethacrylaten und Acrylsäure und/oder Methacrylsäure und
(b) mindestens ein hydrolysiertes Copolymerisat aus Vinylmethylether und Maleinsäureanhydrid in Form der freien Carboxylgruppen oder in Form der zumindest partiell mit Natronlauge, Kalilauge oder Ammoniak neutralisierten Salze.

### Kombination 3:

(a) Polypropylenglykole, Polyethylenglykole und/oder Blockcopolymere aus Ethylenoxid und Propylenoxid mit Molekulargewichten Mₙ von 300 bis 50 000 g/mol und/oder mit C₁- bis C₄-Alkylgruppen ein- oder beidseitig endgruppenverschlossenen Polypropylenglykolen, Polyethylenglykolen und/oder Blockcopolymeren aus Ethylenoxid und Propylenoxid eines Molekulargewichts Mₙ von 300 bis 50 000 g/mol und
(b) Maltodextrin.

### Kombination 4:

(a) Mindestens ein Blockcoplymer aus Ethylenoxid und Propylenoxid und
(b) mindestens ein Copolymer aus Acrylamid und Dimethylaminoethylacrylatmethochlorid.

Die radikalische Polymerisation wird in wässrigem Medium vorgenommen. Techniken zur radikalischen Polymerisation sind dem Fachmann prinzipiell bekannt. Als Reaktionsmedium für die Polymerisation wird üblicherweise nur Wasser verwendet, es können aber auch noch geringe Mengen von mit Wasser mischbaren Lösemitteln, wie beispielsweise Alkohole eingesetzt werden. Die Menge derartiger, mit Wasser mischbarer Lösemittel sollte aber im Regelfalle 20 Gew.-%, bevorzugt 10 Gew.-% bezüglich der Menge aller verwendeten Lösemittel nicht überschreiten. Das wässrige Polymerisationsmedium kann gegebenenfalls noch weitere typische Hilfsmittel umfassen.

Die Polymerisation wird üblicherweise bei pH-Werten von 1 bis 12, vorzugsweise 2 bis 5 durchführt. Der pH-Wert kann einerseits durch die Auswahl von Art und Menge der Monomeren bestimmt werden. Er kann aber selbstverständlich auch durch die Zugabe von geeigneten Säuren oder Basen eingestellt werden.

Die Polymerisation kann beispielsweise so vorgenommen werden, dass man die Stabilisatoren im Reaktionsmedium und die Monomere vorlegt, danach auf die gewünschte Temperatur erhitzt und nach Erreichen der Polymerisationstemperatur Starter sowie gegebenenfalls weitere Monomere zugibt, ohne dass die Erfindung auf diese Vorgehensweise beschränkt sein soll.

Die mittels des beschriebenen Verfahrens erhaltenen wässrigen Dispersionen umfassen einerseits das wasserlösliche Polymer aus den Monomeren (A) sowie gegebenenfalls (B) und/oder Vernetzer (C) und darüber hinaus die Stabilisatoren. Die Feststoffkonzentration, d.h. die Menge von wasserlöslichem Polymer und Stabilisator richtet sich zunächst nach den vom Fachmann im Zuge des Polymerisationsverfahrens gewählten Konzentrationen. Sie kann beispielsweise bei 1 bis 70 Gew.-%, bezogen auf die Gesamtmenge der Dispersion liegen. Bevorzugt wird die Polymerisation so gefahren, dass zunächst eine höhere Feststoffkonzentration erhalten wird. Bewährt haben sich Feststoffkonzentrationen von 5 bis 60 Gew.-%, bevorzugt 10 bis 50 Gew.-% und besonders bevorzugt 20 bis 40 Gew.-%. Bei dieser Vorgehensweise können die Dispersionen vorteilhaft als Konzentrat zum Einsatzort transportiert und erst vor Ort auf die gewünschte Einsatzkonzentration verdünnt werden.

Die Teilchengröße der Dispersionen beträgt üblicherweise 0,1 bis 200 µm, bevorzugt 0,5 bis 100 µm und besonders bevorzugt 1 bis 50 µm. Sie kann vom Fachmann je nach den gewünschten Verwendungseigenschaften eingestellt werden.

Das Molekulargewicht M_{w} der eingesetzten Dispersionen kann vom Fachmann je nach der gewünschten Verwendung einstellen. Dem Fachmann ist bekannt, wie man Molekulargewichte im Zuge der radikalischen Polymerisation einstellen kann, beispielsweise durch geeignete Wahl der Polymerisationstemperatur. Mittels des beschriebenen Verfahrens können unvernetzte Polymere mit Molekulargewichten M_{w} im Bereich von 10 000 bis 15 000 000 g/mol erhalten werden, gemessen mit GPC (Gel Permeation Chromatography, gemessen gegen eine Polyacrylsäure-Standard) und FFF (Field Flow Fractionation). Für vernetzte ist das Molekulargewicht auf diese Weise nicht bestimmbar. Das Molekulargewicht ist dabei abhängig von der eingesetzten Menge des Vernetzers bzw. des Verzweigungsgrades der Polymerisate und kann demzufolge auch außerhalb der genannten Bereiche für unvernetzte Polymerisate liegen. Besonders vorteilhafte Dispersionen zur Ausführung der Erfindung können erhalten werden, indem man die Polymerisation bei Temperaturen von 30 bis 70°C, bevorzugt bei 35 bis 65°C und besonders bevorzugt 40 bis 55°C in Gegenwart von 0,1 bis 1 g Vernetzer (C) vornimmt.

Für die erfindungsgemäße Verwendung werden eignen sich insbesondere Polymere mit einem mittleren Molekulargewicht M_{w} von 100 000 bis 15 000 000 g/mol, bevorzugt 500 000 bis 12 000 000 g/mol und besonders bevorzugt 1 000 000 bis 10 000 000 g/mol.

Die hergestellte Dispersion wird erfindungsgemäß zur tertiären Erdölförderung verwendet. Selbstverständlich können auch zwei oder mehrere verschiedene Dispersionen in Kombination miteinander eingesetzt werden. Die Dispersion können prinzipiell ohne weitere Aufarbeitung in der Form eingesetzt werden, in der sie bei der Herstellung anfallen.

Hinsichtlich der Art der eingesetzten Dispersion trifft der Fachmann je nach Art der Erdöllagerstätte eine geeignete Auswahl. Hierbei können auch Besonderheiten der jeweiligen Lagerstätte berücksichtigt werden. So eignen sich beispielsweise Dispersionen von Acrylsäurehomopolymeren für salzarme Erdöllagerstätten. Bei salzreichen Erdöllagerstätten, insbesondere bei Anwesenheit zweiwertiger Kationen wie beispielsweise Ca²⁺ kann die Salzverträglichkeit der wasserlöslichen Polymere durch die Verwendung Comonomeren mit Polyalkylenoxidseitenketten, wie beispielsweise Allyletherethoxylaten, (Meth)acrylsäureestern von Polyalkylenglykolen und/oder Alkylpolyalkylenglykolen als Comonomeren verbessert werden. Beispielsweise können Copolymere aus 25 bis 90 Gew.-% Acrylsäure und 75 bis 10 Gew.-% Allyletherethoxylaten, (Meth)acrylsäureestern von Polyalkylenglykolen und/oder Alkylpolyalkylenglykolen als Comonomeren eingesetzt werden. Im Regelfalle empfiehlt es sich, bei einer Konzentration von mehr als 0,1 Gew.-% zweiwertiger Kationen in der wässrigen Phase in der Erdöllagerstätte derartig modifizierte Polymere zu verwenden.

Besonders vorteilhaft können erfindungsgemäß solche Dispersionen eingesetzt werden, deren Viskosität bei einer pH-Wert-Zunahme und/oder Verdünnung ansteigt. Dies muss nicht im gesamten pH-Bereich und/oder im gesamten Konzentrationsbereich der Fall sein. Insbesondere eignen sich solche Dispersionen, deren Viskosität im neutralen und basischen pH-Bereich höher ist als im sauren pH-Bereich. Bevorzugt erfolgt die Zunahme der Viskosität im pH-Bereich von 3 bis 11, bevorzugt pH 4 bis pH 10. Die Zunahme der Viskosität beim Verdünnen ist besonders ausgeprägt im Bereich von 35 Gew.-% bis 1,5 Gew.-% Feststoffgehalt, bevorzugt 15 bis 2 Gew.-%. Im Regelfalle handelt es sich um eine kombinierte Viskositätserhöhung aufgrund von Verdünnung und pH-Erhöhung. Derartige Eigenschaften lassen sich insbesondere mit solchen wasserlöslichen Polymeren erreichen, die einen hohen Anteil von saueren Monomeren (A), insbesondere (Meth)acrylsäure aufweisen, beispielsweise solchen mit mindestens 80 Gew.-% Monomer (A) sowie bevorzugt leichter Vernetzung mit 0,1 bis 1 Gew.-% Vernetzer (C). Ist umgekehrt eine hohe pH-Abhängigkeit für bestimmte Anwendungen nicht erwünscht, so empfiehlt sich die Anwendung höherer Anteile von (Meth)acrylamid oder (Meth)acrylamid-Derivaten, beispeilsweise in Mengen von wenigstens 25 Gew.-%.

Zur Anwendung wird die Dispersion in die Erdöllagerstätte eingebracht. Auf die Art des Einbringens kommt es hierbei nicht an.

In einer Ausführungsform der Erfindung wird die erfindungsgemäß verwendete Dispersion in prinzipiell bekannter Art und Weise als Zusatz zur wässrigen Phase beim Polymer-, Dampf- oder Heisswasserfluten verwendet. Sie wird der zum Fluten verwendeten, wässrigen Phase in einer solchen Menge zudosiert, so dass die gewünschte Konzentration resultiert.

Das Zudosieren kann bevorzugt kontinuierlich vorgenommen, indem man die Dispersion in einen Strom des flüssigen Mediums einbringt. Die Dispersion löst sich in der wässrigen Phase in der Regel innerhalb von Sekunden, ohne dass es hierbei zur Bildung störender Gelpartikel kommt. Zur Unterstützung des Lösevorganges kann der Strom noch eine geeignete Mischstrecke durchlaufen. Hierbei kann es sich beispielsweise um einen Rührer oder einfache Einbauten handeln, welche für eine ausreichende Verwirbelung des Flüssigkeitsstromes sorgen. Aufwändige Mischstationen sind aber in aller Regel überflüssig, insbesondere brauchen vorteilhaft keine Dispergieraggregate eingesetzt werden, welche starke Scherkräfte auf das Flutmedium ausüben können.

Die zum Fluten eingesetzte wässrige Phase kann optional auch noch weitere Zusatzstoffe und Hilfsmittel umfassen, vorausgesetzt, es treten keine negativen Effekte auf. Beispiele geeigneter Hilfsmittel umfassen beispielsweise Tenside, Biozide oder Opferangentien, die dem Verlust an Polymer vorbeugen sollen. Weiterhin kann durch Zugabe von Säuren oder Basen der pH-Wert des Flutmediums in gewünschter Art und Weise eingestellt werden. Selbstverständlich ist es auch möglich, dem Flutmedium andere, von den in der wässrigen Dispersion enthaltenen Polymeren verschiedene Polymere einsetzt. Bevorzugt wird nur die Dispersion eingesetzt.

Die weiteren Zusatzstoffe können auch separat verwendet werden. So kann beispielsweise eine Flut mit einem Opferagens oder einem alkalischen Agens, danach eine Tensidflut und schließlich eine Flut enthaltend die erfindungsgemäßen Polymere in die Lagerstätte eingepresst werden.

Bewährt haben sich Konzentrationen von 0,005 bis 5 Gew.-% Feststoff, d.h. wasserlösliches Polymer und Stabilisator zusammen, bevorzugt 0,0075 bis 4 Gew.-% und besonders bevorzugt von 0,01 bis 3 Gew.-% bezüglich des wässrigen Flutmediums.

Die Viskosität des Flutmediums sollte möglichst an die Viskosität des Erdöls in der Erdöllagerstätte angepasst werden. Die erfindungsgemäß verwendeten Dispersionen eignen sich insbesondere für Erdölviskositäten von bis zu 400 mPa•s und bevorzugt von bis zu 250 mPa•s.

Das wässrige Flutmedium wird anschließend in prinzipiell bekannter Art und Weise unter Druck in mindestens ein Bohrloch einer Lagerstätte eingepresst. Die wässrige Phase kann hierbei Raumtemperatur oder auch erhöhte Temperatur aufweisen. Sie kann weiterhin auch mit Wasserdampf gemischt und eingepresst werden. Das freigesetzte Erdöl wird in der Regel anderen Bohrungen der Lagerstätte entnommen.

Die Dispersion kann erfindungsgemäß auch beim CO₂-Fluten im WAG-Prozess verwendet werden. Hierzu werden die wässrige Lösung wie beschrieben eingesetzt, wobei zusätzlich noch CO₂ in die Lagerstätte eingepresst wird.

In einer besonders vorteilhaften Ausführungsform der Erfindung wird die Dispersion nicht bereits vor dem Einbringen in die Erdöllagerstätte mit dem Flutmedium gemischt, sondern sie wird in einer höheren Konzentration durch das Bohrloch eingebracht und erst im Bohrloch oder bevorzugt in der Erdöllagerstätte auf die gewünschte Endkonzentration verdünnt.

Hierzu werden bevorzugt Dispersionen eingesetzt, deren Viskosität mit zunehmendem pH-Wert und/oder Verdünnung zunimmt. Bei dieser Ausführungsform der Erfindung können bevorzugt Dispersionen eingesetzt werden, die eine Konzentration von mindestens 5 Gew.-% Feststoffanteil aufweisen, beispielsweise einen Anteil von 5 bis 35 Gew.-% Feststoff, bevorzugt 5 bis 25 Gew.-% und besonders bevorzugt 8 bis 20 Gew.-%. Sie weist weiterhin im Regelfalle pH-Wert im sauren Bereich, beispielsweise einen pH-Wert von 2 bis 6, bevorzugt 2 bis 5 auf.

Eine solche Dispersion kann in prinzipiell bekannter Art und Weise in die Lagerstätte eingepresst werden. Die Verdünnung in der Lagerstätte kann mit Wasser erfolgen, welches sich bereits in der Lagerstätte befindet, oder aber es kann zur Verdünnung Flutwasser durch die Bohrung nachgepresst werden. Der pH-Wert des Flutwassers wird bevorzugt mit einer geeigneten Base, beispielsweise NaOH, auf den gewünschten Wert eingestellt. Bewährt haben sich insbesondere pH-Werte von 7 bis 11, bevorzugt 7 bis 10. Durch die Verdünnung und/oder pH-Wert-Einstellung erhöht sich erst in der Lagerstätte selbst die Viskosität. Bei dieser Vorgehensweise lässt sich die Dispersion aufgrund geringer Viskosität mit geringeren Kräften in die Lagerstätte einpressen und eine verbesserte Durchdringung der Lagerstätte mit der Dispersion erreichen. Selbstverständlich kann man auch umgekehrt vorgehen, d.h. zunächst die Erdöllagerstätte mit wässrigem Alkali fluten und anschließend eine saure Dispersion einpressen.

Eine mögliche Ausführungsform dieses Verfahrens ist es, alternierend Dispersion sowie Flutwasser oder andere Flutmedien durch mindestens ein Bohrloch in die Erdöllagerstätte einzupressen. Bei dem Flutwasser kann es sich selbstverständlich auch um verdünnte Base zur pH-Wert-Einstellung handeln.

Die folgenden Beispiele sollen die Erfindung näher erläutern:

Zur Synthese der Dispersionen wurden die folgenden Stabilisatoren eingesetzt:
- Stabilisator 1:: Pfropfpolymerisat von Vinylacetat auf Polyethylenglykol des Molekulargewichts M_{N} 6000, Polymerkonzentration 20%
- Stabilisator 2:: Hydrolysiertes Copolymerisat aus Vinylmethylether und Maleinsäure in Form der freien Carboxylgruppen, Polymerkonzentration 35%
- Stabilisator 3:: Blockcopolymer aus Polyalkylenglykolen mit einem Molekulargewicht Mₙ von 1000
- Stabilisator 4:: Maltodextrin (C-PUR01910, 100%ig)

Die Viskosität der Dispersionen wurde jeweils in einem Brookfield-Viskosimeter mit einer Spindel Nr. 4 bei 20 UpM und einer Temperatur von 20°C gemessen.

### Beispiel 1

In einem 250 ml fassenden Vierhalskolben, der mit einem Teflonrührer und einer Vorrichtung für das Arbeiten unter Stickstoff ausgerüstet war, wurden unter Durchleiten von Stickstoff 90,0 g Stabilisator 1, 51,4 g Stabilisator 2 und 28,6 g vollständig entsalztes Wasser vorgelegt und mit einer Drehzahl von 300 UpM gerührt. Zu dieser Lösung tropfte man innerhalb von 5 bis 10 Minuten eine Mischung aus 30 g Acrylsäure und 0,09 g Triallylamin als Vernetzer und erwärmte die Mischung innerhalb von 5 bis 10 Minuten auf eine Temperatur von 40°C. Man gab dann 0,03 g 2,2'-Azobis(4-methoxy-2,4-dimethylvaleronitril) zu und polymerisierte die Mischung 5 Stunden bei einer Temperatur von 40°C. Dann gab man zur Nachpolymerisation nochmals 0,05 g des genannten Initiators zu und erhitzte die Dispersion eine Stunde auf eine Temperatur von 50°C.

Man erhielt eine wässrige Dispersion mit einer Viskosität von 2700 mPas, einem pH-Wert von 4 und einem Feststoffgehalt von 33 Gew.-%. Die Teilchengrößenverteilung der dispergierten Teilchen der Polymerdispersion betrug 5 bis 60 µm.

### Beispiel 2

In der im Beispiel 1 angegebenen Vorrichtung wurden 90,0 g Stabilisator 1, 51,4 g Stabilisator 2 und 28,6 g vollständig entsalztes Wasser vorgelegt und unter Durchleiten von Stickstoff mit einer Drehzahl von 300 UpM gerührt. Zu dieser Lösung tropfte man innerhalb von 5 bis 10 Minuten eine Mischung aus 30 g Acrylsäure und 0,09 g Triallylamin als Vernetzer und erwärmte die Emulsion innerhalb von 5 bis 10 Minuten auf eine Temperatur von 50°C. Man gab dann 0,03 g 2,2'-Azobis(2,4-dimethylvaleronitril) zu und polymerisierte die Mischung 5 Stunden bei einer Temperatur von 50°C. Dann gab man zur Nachpolymerisation 0,05 g 2,2'-Azobis(N,N'-dimethylenisobutyramidine)-dihydrochlorid zu und erhitzte die Dispersion eine Stunde auf eine Temperatur von 60°C.

Man erhielt eine wässrige Dispersion mit einer Viskosität von 3700 mPas, einem pH-Wert von 4 und einem Feststoffgehalt von 33 Gew.-%. Die Teilchengrößenverteilung der dispergierten Teilchen der Polymerdispersion betrug 5 bis 30 µm.

### Beispiel 3

In der im Beispiel 1 angegebenen Vorrichtung wurden 63,0 g Stabilisator 3, 9,0 g Stabilisator 4, 400,0 g Wasser und 45,0 g Acrylsäure vorgelegt und unter Durchleiten von Stickstoff mit einer Drehzahl von 100 UpM gerührt. Zu dieser Lösung wurden 0,45 g Natriumpersulfat und 14,4 g Wasser zugegeben und 15 Minuten bei 25°C anpolymerisiert. Dann wurden 135 g Acrylsäure und 27 g Stabilisator 8 in 2 Stunden bei 25°C zugefahren. Gleichzeitig wurden 0,18 g Ascorbinsäure in 7 Stunden zugefahren. Anschließend wurde noch eine Stunde nachpolymerisiert. Man erhielt eine wässrige Dispersion mit einer Viskosität von 800 mPas, einem pH-Wert von 1,5 und einem Feststoffgehalt von ca. 40 Gew.-%.

### Beispiel 4

In einem 2 I fassenden Vierhalskoben, der mit einem Rührer und einer Vorrichtung für das Arbeiten unter Stickstoff ausgerüstet war, wurden unter Durchleiten von Stickstoff 257,0 g Stabilisator 1, 449,0 g Stabilisator 2 und 102,5 g vollständig entsalztes Wasser vorgelegt und mit einer Drehzahl von 200 UpM 10 Minuten lang gerührt. Zu dieser Lösung tropfte man innerhalb von 10 Minuten 60 g Acrylsäure, erwärmte die Reaktionsmischung auf 60°C, fügte innerhalb von 3,5 Stunden eine Lösung aus 90 g Acrylsäure und 1,5 g Ethyltrimethylolpropantriacrylat als Vernetzer und zeitgleich startend eine Lösung von 0,15 g 2,2'-Azobis(N,N'-dimethylenisobutyramidine)dihydrochlorid in 40 g Wasser zu, wobei letztere Lösung innerhalb von 4 Stunden zugegeben wurde. Nach Zulaufende wurde eine weitere halbe Stunde bei 60°C gerührt. Anschließend wurde durch Zugabe von 0,225 g 2,2'-Azobis(N,N'-dimethylenisobutyramidine)-dihydrochlorid eine Stunde bei 60°C nachpolymerisiert.
Nach Abkühlen auf Raumtemperatur erhielt man eine wässrige Dispersion mit einem Feststoffgehalt von 36 Gew.-% (wässriges Polymer 15 %).

### Anwendungstechnische Tests:

### Test 1:

Durch Zugabe von Wasser und Natronlauge wurden aus den in den Beispielen 1 bis 3 synthetisierten Dispersionen verdünnt. Es wurden 2 %ige Dispersionen mit einem pH-Wert von 7 hergestellt. Die Ergebnisse der Viskositätsmessungen sind in Tabelle 1 zusammengestellt:

### Test 2:

In je einem Becherglas wurden 100 ml vollständig entionisiertes Wasser (pH 7) vorgelegt, dann die wässrige Dispersion gemäß Beispiel 4 unter Rühren mit einem Magnetrührer in unterschiedlichen Mengen zugegeben. Es ergab sich innerhalb von Sekunden eine klare Lösung. Die Konzentration sowie der pH-Wert und die Viskosität der resultierenden Polymerlösungen wurde mit einem Brookfield Viskosimeter DV-II (100 rpm, 20°C) gemessen.

Danach wurde der pH-Wert mit 30 % ider NaOH auf einen Wert von 10 eingestellt und nochmals die Viskosität gemessen.

Die Versuchsergebnisse sind in Tabelle 2 zusammengestellt.

### Vergleichsversuch:

In einem Becherglas wurde 1 g eines kommerziell erhältlichen pulverförmigen Verdickers auf Basis eines Polyacrylsäurepolymers (Carbopol® 674) zu 100 ml Wasser (pH 7) gegeben und mit einem Magnetrührer intensiv gerührt. Das Polymer war auch nach 1 h noch nicht klar gelöst; ein Großteil des Polymers verbleibt ungelöst in Form von Gelpartikeln. Der Löseversuch wurde nach 1 Stunde abgebrochen.

**Tabelle 1: Verdünnung und pH-Einstellung der Dispersionen gemäß Beispielen 1 bis 3**

| **Ursprüngliche Dispersion** | | | | | **Nach Verdünnung und pH-Änderung** | | |
|---|---|---|---|---|---|---|---|
| **Nr.** | **Feststoffgehalt (Polymer + Stabilisator) [Gew. %]** | **Anteil Stabilisator bzgl. Polymer** | **pH-Wert** | **Viskosität [mPas]** | **Feststoffgehalt** | **pH-Wert** | **Viskosität** |
| Beispiel 1 | 33 | 120 % | 4 | 2700 | 2 | 7 | 39000 |
| Beispiel 2 | 33 | 120 % | 4 | 3700 | 2 | 7 | 29000 |
| Beispiel 3 | 40 | 55% | 1,5 | 800 | 2 | 7 | 5000 |

**Tabelle 2: pH-Wert-Einstellung von verdünnten Dispersionen gemäß Beispiel 5**

| | **Vor Zugabe von NaOH** | | | **Nach Zugabe von NaOH** | |
|---|---|---|---|---|---|
| | **Konzentration** | **pH-Wert** | **Viskosität [mPas]** | **pH-Wert** | **Viskosität [mPas]** |
| Beispiel 4-1 | 1500 ppm | 5,2 | 60 | 10,3 | 140 |
| Beispiel 4-2 | 3000 ppm | 5,0 | 105 | 10,3 | 269 |
| Beispiel 4-3 | 6000 ppm | 4,8 | 217 | 10,3 | 680 |
| Beispiel 4-4 | 12000 ppm | 4,6 | 433 | 10,1 | 1930 |

Beispiele zeigen, dass sich unter erfindungsgemäßer Verwendung von Dispersionen wasserlöslicher Polymerer sehr schnell homogene Lösungen (innerhalb von Sekunden) ergeben.

Bei Verwendung typischer Verdicker als Feststoff wurde auch nach 1 h noch keine klare Lösung erreicht.

Verdünnte Lösungen, welche unter Verwendung der erfindungsgemäß verwendeten Polymeren erhalten werden können, weisen Viskositäten vergleichbar denen von Erdöl auf. Die Viskosität lässt sich durch Verdünnung bzw. die Zugabe von Basen deutlich erhöhen.

## Patentansprüche

1. Verwendung von wasserlöslichen Polymeren zur tertiären Erdölförderung durch Einbringen des Polymers in eine Erdöllagerstätte, wobei
• das wasserlösliche Polymer in Form einer Dispersion aus dem wasserlöslichen Polymer sowie mindestens eines wasserlöslichen, polymeren Stabilisators eingesetzt wird,
• das wasserlösliche Polymer mindestens 25 Gew. % saure Gruppen aufweisende, monoethylenisch ungesättigte Monomere (A) sowie optional davon verschiedene monoethylenisch ungesättigte Monomere (B) und/oder optional Vernetzer (C) als monomere Bausteine umfasst, und wobei es sich bei den sauren Gruppen um solche ausgewählt aus der Gruppe von Carboxylgruppen, Sulfonsäuregruppen oder Phosphonsäuregruppen handelt, und
• die Viskosität der Dispersion bei einer pH-Wert-Änderung und/oder Verdünnung ansteigt,
**dadurch gekennzeichnet, dass** es sich bei dem Stabilisator um mindestens einen ausgewählt aus der Gruppe von
(a) Pfropfpolymerisaten von Vinylacetat und/oder Vinylpropionat auf Polyethylenglykolen, ein- oder beidseitig mit Alkyl-, Carboxyl- oder Aminogruppen endgruppenverschlossenen Polyethylenglykolen, Copolymerisaten aus Alkylpolyalkylenglykolacrylaten oder Alkylpolyalkylenglykolmethacrylaten und Acrylsäure und/oder Methacrylsäure, Polyalkylenglykolen oder ein- oder beidseitig mit Alkyl-, Carboxyl- oder Aminogruppen endgruppenverschlossene Polyalkylenglykolen,
(b) hydrolysierten Copolymerisaten aus Vinylalkylethern und Maleinsäureanhydrid in Form der freien Carboxylgruppen und in Form der zumindest partiell mit Alkalimetallhydroxiden und/oder Ammoniumbasen neutralisierten Salze und/oder einer wasserlöslichen Stärke aus der Gruppe kationisch modifizierter Kartoffelstärke, anionisch modifizierter Kartoffelstärke, abgebauter Kartoffelstärke und Maltodextrin,
und/oder
(c) wasserlöslichen Copolymeren aus
(c1) nichtionischen monoethylenisch ungesättigten Monomeren, ausgewählt aus der Gruppe von Acrylamid, Methacrylamid, N-Vinylformamid, N-Vinylpyrrolidon und/oder N-Vinylcaprolactam,
(c2) kationischen, monoethylenisch ungesättigten Monomeren, ausgewählt aus der Gruppe von Dialkylaminoalkylacrylat, Dialkylaminoalkytmethaaylat, partiell oder vollständig neutralisierte Dialkylaminoalkyl(meth)acrylate, quaternierte Dialkylaminoalkyl-(meth)acrylate, Dialkyldiallylammoniunhalogenide, N-Vinylimidazol und quaterniertem N-Vinylimidazol, sowie optional
(c3) anionischen Acrylsäure, Methacrylsäure, Vinylsulfonsäure, Vinylphosphonsäure, Maleinsäure, Fumarsäure, Crotonsäure, Itakonsäure sowie die Alkalimetall- und Ammoniumsalze dieser Säuren
handelt, wobei im Falle von (c) der Anteil der einpolymerisierten kationischen Monomere (c2) größer ist als der der anionischen Monomere (c3).

2. Verwendung gemäß Anspruch 1, **dadurch gekennzeichnet, dass** die Viskosität der Dispersion im neutralen und basischen pH-Bereich höher ist als im sauren pH-Bereich.

3. Verwendung gemäß Anspruch 1 oder 2, **dadurch gekennzeichnet dass** die Dispersion durch radikalische Polymerisation der Monomere (A) sowie optional Monomeren (B) und/oder optional Vernetzem (C) in wässrigem Medium in Gegenwart 5 bis 250 Gew. %, bezogen auf die Summe aller eingesetzten Monomere, mindestens eines wasserlöslichen polymeren Stabilisators erhältlich ist.

4. Verwendung gemäß einem der Ansprüche 1 bis 3, **dadurch gekennzeichnet, dass** es sich bei dem Stabilisator um eine Kombination aus mindestens einem ausgewählt aus der Gruppe von (a) sowie mindestens einem davon verschiedenen, ausgewählt aus der Gruppe von (b) und/oder (c) handelt.

5. Verwendung gemäß einem der Ansprüche 1 bis 4, **dadurch gekennzeichnet, dass** man die wässrige Dispersionen als Zusatz zur wässrigen Phase beim Polymer-, Dampf-, oder Heißwasserfluten einsetzt.

6. Verwendung gemäß einem der Ansprüche 1 bis 5, **dadurch gekennzeichnet, dass** man die wässrigen Dispersionen als Zusatz beim CO₂-Fluten im WAG-Verfahren einsetzt.

7. Verfahren zur Erdölförderung, bei dem man einem wässrigen Flutmedium mindestens ein wasserlösliches Polymer zusetzt, durch mindestens ein Bohrloch in eine Erdöllagerstätte einpresst und der Lagerstätte durch mindestens ein davon verschiedenes Bohrloch Erdöl entnimmt, wobei
• das wasserlösliche Polymer in Form einer Dispersion aus dem wasserlöslichen Polymer sowie mindestens eines wasserlöslichen, polymeren Stabilisators eingesetzt wird,
• das wasserlösliche Polymer mindestens 25 Gew. % saure Gruppen aufweisende, monoethylenisch ungesättigte Monomere (A) sowie optional davon verschiedene monoethylenisch ungesättigte Monomere (B) und/oder optional Vernetzer (C) als monomere Bausteine umfasst, und wobei es sich bei den sauren Gruppen um solche ausgewählt aus der Gruppe von Carboxylgruppen, Sulfonsäuregruppen oder Phosphonsäuregruppen handelt, und
• die Viskosität der Dispersion bei einer pH-Wert-Änderung und/oder Verdünnung ansteigt,
**dadurch gekennzeichnet, dass** es sich bei dem Stabilisator um mindestens einen handelt ausgewählt aus der Gruppe von (a), (b), (c) gemäß Anspruch 1.

8. Verfahren gemäß Anspruch 7, **dadurch gekennzeichnet, dass** die Viskosität der Dispersion im neutralen und basischen pH-Bereich höher ist als im sauren pH-Bereich.

9. Verfahren gemäß Anspruch 7 oder 8, **dadurch gekennzeichnet dass** die Dispersion durch radikalische Polymerisation der Monomere (A) sowie optional Monomeren (B) und/oder optional Vernetzem (C) in wässrigem Medium in Gegenwart 5 bis 250 Gew. %, bezogen auf die Summe aller eingesetzten Monomere, mindestens eines wasserlöslichen polymeren Stabilisators erhältlich ist.

10. Verfahren gemäß einem der Ansprüche 7 bis 9, **dadurch gekennzeichnet, dass** es sich bei dem Stabilisator um eine Kombination aus mindestens einem ausgewählt aus der Gruppe von (a) sowie mindestens einem davon verschiedenen, ausgewählt aus der Gruppe von (b) und/oder (c) handelt.

11. Verfahren gemäß einem der Ansprüche 7 bis 10, **dadurch gekennzeichnet, dass** der Feststoffgehalt an Dispersion im Flutmedium 0,01 bis 10 Gew. % beträgt.

12. Verfahren zur Erdölförderung, bei dem man mindestens ein Flutmedium durch mindestens ein Bohrloch in eine Erdöllagerstätte einpresst und der Lagerstätte durch mindestens ein davon verschiedenes Bohrloch Erdöl entnimmt, wobei
• es sich bei mindestens einem der Flutmedien eine wässrige Dispersion aus mindestens einem wasserlöslichen Polymer sowie mindestens einem wasserlöslichen, polymeren Stabilisator handelt,
• das wasserlösliche Polymer mindestens 25 Gew. % saure Gruppen aufweisende, monoethylenisch ungesättigte Monomere (A) sowie optional davon verschiedene monoethylenisch ungesättigte Monomere (B) und/oder optional Vernetzer (C) als monomere Bausteine umfasst, und wobei es sich bei den sauren Gruppen um solche ausgewählt aus der Gruppe von Carboxylgruppen, Sulfonsäuregruppen oder Phosphonsäuregruppen handelt, und
• die Viskosität der Dispersion bei einer pH-Wert-Änderung und/oder Verdünnung ansteigt,
• die Dispersion einen Feststoffgehalt von mindestens 5 Gew. % und einen pH-Wert im sauren Bereich aufweist,
**dadurch gekennzeichnet, dass** es sich bei dem Stabilisator um mindestens einen handelt ausgewählt aus der Gruppe von (a), (b), (c) gemäß Anspruch 1.
und man die Dispersion weiterhin in der Lagerstätte mit Wasser oder einem wässrigen Medium verdünnt, wobei die Verdünnung entweder mit Wasser oder wässrigem Medium erfolgt, welches sich bereits in der Lagerstätte befindet, oder indem man danach Wasser oder ein wässriges Flutmedium in die Lagerstätte einpresst.

13. Verfahren gemäß Anspruch 12, **dadurch gekennzeichnet, dass** die Viskosität der Dispersion im neutralen und basischen pH-Bereich höher ist als im sauren pH-Bereich.

14. Verfahren gemäß Anspruch 12 oder 13, **dadurch gekennzeichnet dass** die Dispersion durch radikalische Polymerisation der Monomere (A) sowie optional Monomeren (B) und/oder optional Vernetzem (C) in wässrigem Medium in Gegenwart 5 bis 250 Gew. %, bezogen auf die Summe aller eingesetzten Monomere, mindestens eines wasserlöslichen polymeren Stabilisators erhältlich ist.

15. Verfahren gemäß einem der Ansprüche 12 bis 14, **dadurch gekennzeichnet, dass** es sich bei dem Stabilisator um eine Kombination aus mindestens einem ausgewählt aus der Gruppe von (a) sowie mindestens einem davon verschiedenen, ausgewählt aus der Gruppe von (b) und/oder (c) handelt.

16. Verfahren zur Erdölförderung gemäß einem der Ansprüche 12 bis 15, **dadurch gekennzeichnet, dass** es sich bei dem zusätzlichen wässrigen Flutmedium um ein basisches Medium handelt.

17. Verfahren gemäß einem der Ansprüche 12 bis 16, **dadurch gekennzeichnet, dass** man alterierend wässrige Dispersion und wässriges Flutmedium in die Lagerstätte einpresst.

## Claims

1. The use of water-soluble polymers for tertiary mineral oil production by introducing the polymer into a mineral oil deposit,
• the water-soluble polymer being used in the form of a dispersion of the water-soluble polymer and at least one water-soluble, polymeric stabilizer,
• the water-soluble polymer comprising at least 25% by weight of monoethylenically unsaturated monomers (A) having acidic groups and optionally monoethylenically unsaturated monomers (B) differing therefrom and/or optionally crosslinking agents (C) as monomeric building blocks, and the acidic groups being those selected from the group consisting of carboxyl groups, sulfo groups or phosphonic acid groups, and
• the viscosity of the dispersion increasing in the case of a pH change and/or dilution,
wherein the stabilizer is at least one stabilizer selected from the group consisting of
(a) graft polymers of vinyl acetate and/or vinyl propionate on polyethylene glycols, polyethylene glycols endcapped at one or both ends with alkyl, carboxyl or amino groups, copolymers of alkylpolyalkylene glycol acrylates or alkylpolyalkylene glycol methacrylates and acrylic acid and/or methacrylic acid, polyalkylene glycols or polyalkylene glycols endcapped at one or both ends with alkyl, carboxyl or amino groups,
(b) hydrolyzed copolymers of vinyl alkyl ethers and maleic anhydride in the form of the free carboxyl groups and in the form of the salts at least partly neutralized with alkali metal hydroxides and/or ammonium bases and/or a water-soluble starch from the group consisting of cationically modified potato starch, anionically modified potato starch, degraded potato starch and maltodextrin,
and/or
(c) water-soluble copolymers of
(c1) nonionic monoethylenically unsaturated monomers selected from the group consisting of acrylamide, methacrylamide, N-vinylformamide, N-vinylpyrrolidone and/or N-vinylcaprolactam,
(c2) cationic, monoethylenically unsaturated monomers selected from the group consisting of dialkylaminoalkyl acrylate, dialkylaminoalkyl methacrylate, partly or completely neutralized dialkylaminoalkyl (meth)acrylates, quaternized dialkylaminoalkyl (meth)acrylates, dialkyldiallylammonium halides, N-vinylimidazole and quaternized N-vinylimidazole, and optionally
(c3) anionic acrylic acid, methacrylic acid, vinylsulfonic acid, vinylphosphonic acid, maleic acid, fumaric acid, crotonic acid, itaconic acid and the alkali metal and ammonium salts of these acids,
in the case of (c), the proportion of cationic monomers (c2) incorporated in the form of polymerized units being greater than that of the anionic monomers (c3).

2. The use according to claim 1, wherein the viscosity of the dispersion in the neutral and basic pH range is higher than in the acidic pH range.

3. The use according to claim 1 or 2, wherein the dispersion is obtainable by free radical polymerization of the monomers (A) and optionally monomers (B) and/or optionally crosslinking agents (C) in an aqueous medium in the presence of from 5 to 250% by weight, based on the sum of all monomers used, of at least one water-soluble polymeric stabilizer.

4. The use according to any of claims 1 to 3, wherein the stabilizer is a combination of at least one stabilizer selected from the group consisting of (a) and at least one stabilizer differing therefrom and selected from the group consisting of (b) and/or (c).

5. The use according to any of claims 1 to 4, wherein the aqueous dispersions are used as an additive to the aqueous phase in polymer, steam or hot water flooding.

6. The use according to any of claims 1 to 5, wherein the aqueous dispersions are used as an additive in CO₂ flooding in the WAG process.

7. A process for mineral oil production, in which at least one water-soluble polymer is added to an aqueous flooding medium and is forced through at least one well into a mineral oil deposit, and mineral oil is withdrawn from the deposit through at least one well differing therefrom,
• the water-soluble polymer being used in the form of a dispersion of the water-soluble polymer and at least one water-soluble, polymeric stabilizer,
• the water-soluble polymer comprising at least 25% by weight of monoethylenically unsaturated monomers (A) having acidic groups and optionally monoethylenically unsaturated monomers (B) differing therefrom and/or optionally crosslinking agents (C) as monomeric building blocks, and the acidic groups being those selected from the group consisting of carboxyl groups, sulfo groups or phosphonic acid groups, and
• the viscosity of the dispersion increasing in the case of a pH change and/or dilution,
wherein the stabilizer is at least one stabilizer selected from the group consisting of (a), (b), (c) according to claim 1.

8. The process according to claim 7, wherein the viscosity of the dispersion in the neutral and basic pH range is higher than in the acidic pH range.

9. The process according to claim 7 or 8, wherein the dispersion is obtainable by free radical polymerization of the monomers (A) and optionally monomers (B) and/or optionally crosslinking agents (C) in an aqueous medium in the presence of from 5 to 250% by weight, based on the sum of all monomers used, of at least one water-soluble polymeric stabilizer.

10. The process according to any of claims 7 to 9, wherein the stabilizer is a combination of at least one stabilizer selected from the group consisting of (a) and at least one stabilizer differing therefrom and selected from the group consisting of (b) and/or (c).

11. The process according to any of claims 7 to 10, wherein the solids content of the dispersion in the flooding medium is from 0.01 to 10% by weight.

12. A process for mineral oil production, in which at least one flooding medium is forced through at least one well into a mineral oil deposit and mineral oil is withdrawn from the deposit through at least one well differing therefrom,
• at least one of the flooding media being an aqueous dispersion of at least one water-soluble polymer and at least one water-soluble, polymeric stabilizer,
• the water-soluble polymer comprising at least 25% by weight of monoethylenically unsaturated monomers (A) having acidic groups and optionally monoethylenically unsaturated monomers (B) differing therefrom and/or optionally crosslinking agents (C) as monomeric building blocks, and the acidic groups being those selected from the group consisting of carboxyl groups, sulfo groups or phosphonic acid groups, and
• the viscosity of the dispersion increasing in the case of a pH change and/or dilution,
• the dispersion having a solids content of at least 5% by weight and a pH in the acidic range,
wherein the stabilizer is at least one stabilizer selected from the group consisting of (a), (b), (c) according to claim 1,
and the dispersion is furthermore diluted in the deposit with water or an aqueous medium, the dilution being effected either with water or aqueous medium which is already present in the deposit or by subsequently forcing water or an aqueous flooding medium into the deposit.

13. The process according to claim 12, wherein the viscosity of the dispersion in the neutral and basic pH range is higher than in the acidic pH range.

14. The process according to claim 12 or 13, wherein the dispersion is obtainable by free radical polymerization of the monomers (A) and optionally monomers (B) and/or optionally crosslinking agents (C) in an aqueous medium in the presence of from 5 to 250% by weight, based on the sum of all monomers used, of at least one water-soluble polymeric stabilizer.

15. The process according to any of claims 12 to 14, wherein the stabilizer is a combination of at least one stabilizer selected from the group consisting of (a) and at least one stabilizer differing therefrom and selected from the group consisting of (b) and/or (c).

16. The process for mineral oil production according to any of claims 12 to 15, wherein the additional aqueous flooding medium is a basic medium.

17. The process according to any of claims 12 to 16, wherein aqueous dispersion and aqueous flooding medium are forced alternately into the deposit.

## Revendications

1. Utilisation de polymères hydrosolubles pour extraction de pétrole tertiaire par introduction du polymère dans un gisement pétrolifère, dans laquelle :
• le polymère hydrosoluble est utilisé sous la forme d'une dispersion formée du polymère hydrosoluble ainsi qu'au moins d'un stabilisateur polymère hydrosoluble,
• le polymère hydrosoluble comprend au moins 25 % en poids de monomères (A) à insaturation monoéthylénique présentant des groupes acides ainsi qu'éventuellement de monomères (B) à insaturation monoéthylénique différents des premiers et/ou éventuellement d'agents de réticulation (C) sous forme de composants monomères, et dans laquelle les groupes acides sont choisis dans le groupe constitué de groupes carboxyle, de groupes acide sulfonique ou des groupes acide phosphonique, et
• la viscosité de la dispersion s'accroît en cas de modification de la valeur du pH et/ou en cas de dilution,
**caractérisée en ce que** le stabilisateur est au moins un composé choisi dans le groupe constitué des composés suivants :
(a) des polymères greffés d'acétate de vinyle et/ou de propionate de vinyle sur des polyéthylèneglycols, des polyéthylèneglycols bloqués sur un côté ou les deux côtés par des groupes terminaux alkyle, carboxyle ou amino, des copolymères d'acrylates d'alkylpolyalkylèneglycols ou de méthacrylates d'alkylpolyalkylèneglycols et d'acide acrylique et/ou d'acide méthacrylique, des polyalkylèneglycols ou des polyalkylèneglycols bloqués sur un côté ou les deux côtés par des groupes terminaux alkyle, carboxyle ou amino,
(b) des copolymères hydrolysés de vinylalkyléthers et d'anhydride d'acide maléique sous la forme des groupes carboxyle libres et sous la forme des sels neutralisés au moins partiellement avec des hydroxydes de métaux alcalins et/ou des bases d'ammonium, et/ou un amidon hydrosoluble du groupe constitué de l'amidon de pomme de terre modifié par voie cationique, de l'amidon de pomme de terre modifié par voie anionique, de l'amidon de pomme de terre dégradé et de la maltodextrine,
et/ou
(c) des copolymères hydrosolubles constitués de :
(c1) monomères non ioniques à insaturation monoéthylénique, choisis dans le groupe constitué de l'acrylamide, du méthacrylamide, du N-vinylformamide, de la N-vinylpyrrolidone et/ou du N-vinylcaprolactame,
(c2) monomères cationiques à insaturation monoéthylénique, choisis dans le groupe constitué de l'acrylate de dialkylaminoalkyle, du méthacrylate de dialkylaminoalkyle, des (méth)acrylates de dialkylaminoalkyle partiellement ou complètement neutralisés, des (méth)acrylates de dialkylaminoalkyle quaternisés, des halogénures de dialkyldiallylammonium, du N-vinylimidazole et du N-vinylimidazole quaternisé, ainsi qu'éventuellement
(c3) un acide anionique de types acide acrylique, acide méthacrylique, acide vinylsulfonique, acide vinylphosphonique, acide maléique, acide fumarique, acide crotonique, acide itaconique ainsi que les sels de métaux alcalins et d'ammonium de ces acides,
où, dans le cas de (c), la fraction des monomères cationiques polymérisés (c2) est supérieure à celle des monomères anioniques (c3).

2. Utilisation selon la revendication 1, **caractérisée en ce que** la viscosité de la dispersion dans la plage de pH neutres et basiques est plus élevée que dans la plage de pH acides.

3. Utilisation selon la revendication 1 ou 2, **caractérisée en ce que** l'on peut-obtenir la dispersion par polymérisation radicalaire des monomères (A) ainsi qu'éventuellement des monomères (B) et/ou éventuellement des agents de réticulation (C) en milieu aqueux en présence de 5 à 250 % en poids, par rapport à la somme de tous les monomères utilisés, d'au moins un stabilisateur polymère hydrosoluble.

4. Utilisation selon l'une quelconque des revendications 1 à 3, **caractérisée en ce que** le stabilisateur est une combinaison d'au moins un composé choisi dans le groupe de (a) ainsi que d'au moins un composé différent de celui-ci, choisi dans le groupe de (b) et/ou de (c).

5. Utilisation selon l'une quelconque des revendications 1 à 4, **caractérisée en ce que** l'on utilise les dispersions aqueuses comme additif pour la phase aqueuse lors de l'injection de polymère, de vapeur d'eau ou d'eau chaude.

6. Utilisation selon l'une quelconque des revendications 1 à 5, **caractérisée en ce que** l'on utilise les dispersions aqueuses comme additif lors de l'injection de CO₂ dans le procédé WAG.

7. Procédé d'extraction de pétrole, dans lequel on ajoute à un milieu d'injection aqueux au moins un polymère hydrosoluble, on l'injecte à travers au moins un trou de forage dans un gisement pétrolifère et on extrait du pétrole du gisement par au moins un trou de forage différent de celui-ci, dans lequel :
• le polymère hydrosoluble est utilisé sous la forme d'une dispersion du polymère hydrosoluble ainsi qu'au moins d'un stabilisateur polymère hydrosoluble,
• le polymère hydrosoluble comprend au moins 25 % en poids de monomères (A) à insaturation monoéthylénique présentant des groupes acides ainsi qu'éventuellement de monomères (B) à insaturation monoéthylénique différents des premiers et/ou éventuellement d'agents de réticulation (C) sous forme de composants monomères, et dans lequel les groupes acides sont choisis dans le groupe constitué de groupes carboxyle, de groupes acide sulfonique ou de groupes acide phosphonique, et
• la viscosité de la dispersion s'accroît en cas de modification de la valeur de pH et/ou en cas de dilution,
**caractérisé en ce que** le stabilisateur est au moins un composé choisi dans le groupe constitué de (a), (b), (c) selon la revendication 1.

8. Procédé selon la revendication 7, **caractérisé en ce que** la viscosité de la dispersion dans la plage de pH neutres et basiques est plus élevée que dans la plage de pH acides.

9. Procédé selon la revendication 7 ou 8, **caractérisé en ce que** l'on peut obtenir la dispersion par polymérisation radicalaire des monomères (A) ainsi qu'éventuellement des monomères (B) et/ou éventuellement des agents de réticulation (C) en milieu aqueux en présence de 5 à 250 % en poids, par rapport à la somme de tous les monomères utilisés, d'au moins un stabilisateur polymère hydrosoluble.

10. Procédé selon l'une quelconque des revendications 7 à 9, **caractérisé en ce que** le stabilisateur est une combinaison d'au moins un composé choisi dans le groupe de (a) ainsi que d'au moins un composé différent de celui-ci, choisi dans le groupe de (b) et/ou de (c).

11. Procédé selon l'une quelconque des revendications 7 à 10, **caractérisé en ce que** la teneur en solides de la dispersion dans le milieu d'injection représente 0,01 à 10 % en poids.

12. Procédé d'extraction de pétrole, dans lequel on injecte au moins un milieu d'injection à travers au moins un trou de forage dans un gisement pétrolifère et on extrait du pétrole du gisement par au moins un trou de forage différent de celui-ci, dans lequel :
• au moins l'un des milieux d'injection est une dispersion aqueuse constituée d'au moins un polymère hydrosoluble ainsi qu'au moins d'un stabilisateur polymère hydrosoluble,
• le polymère hydrosoluble comprend au moins 25 % en poids de monomères (A) à insaturation monoéthylénique présentant des groupes acides ainsi qu'éventuellement de monomères (B) à insaturation monoéthylénique différents des premiers et/ou éventuellement d'agents de réticulation (C) sous forme de composants monomères et dans lequel les groupes acides sont choisis dans le groupe constitué de groupes carboxyle, de groupes acide sulfonique
ou de groupes acide phosphonique,
• la viscosité de la dispersion s'accroît en cas de modification de la valeur du pH et/ou en cas de dilution, et
• la dispersion présente une teneur en solides d'au moins 5 % en poids et une valeur de pH dans la plage acide,
**caractérisé en ce que** le stabilisateur est au moins un composé choisi dans le groupe constitué de (a), (b) et (c) selon la revendication 1,
et on dilue en outre la dispersion dans le gisement avec de l'eau ou un milieu aqueux, la dilution s'effectuant soit à l'eau, soit avec un milieu aqueux qui se trouve déjà dans le gisement, ou en injectant ensuite de l'eau ou un milieu d'injection aqueux dans le gisement.

13. Procédé selon la revendication 12, **caractérisé en ce que** la viscosité de la dispersion dans la plage de pH neutres et basiques est plus élevée que dans la plage de pH acides.

14. Procédé selon la revendication 12 ou 13, **caractérisé en ce que** l'on peut obtenir la dispersion par polymérisation radicalaire des monomères (A) ainsi qu'éventuellement des monomères (B) et/ou éventuellement des agents de réticulation (C) en milieu aqueux en présence de 5 à 250 % en poids, par rapport à la somme de tous les monomères utilisés, d'au moins un stabilisateur polymère hydrosoluble.

15. Procédé selon l'une quelconque des revendications 12 à 14, **caractérisé en ce que** le stabilisateur est une combinaison d'au moins un composé choisi dans le groupe de (a) ainsi que d'au moins un composé différent de celui-ci, choisi dans le groupe de (b) et/ou de (c).

16. Procédé d'extraction de pétrole selon l'une quelconque des revendications 12 à 15, **caractérisé en ce que** le milieu d'injection aqueux supplémentaire est un milieu basique.

17. Procédé selon l'une quelconque des revendications 12 à 16, **caractérisé en ce que** l'on injecte en alternance la dispersion aqueuse et le milieu d'injection aqueux dans le gisement.
